**Europäisches Patentamt**

**European Patent Office**

**Office européen des brevets**

(19)

(11) Veröffentlichungsnummer: **0 185 301**
**B1**

(12) # EUROPÄISCHE PATENTSCHRIFT

(45) Veröffentlichungstag der Patentschrift:
02.11.88

(51) Int. Cl.⁴: **F 16 H 25/20**

(21) Anmeldenummer: **85115735.4**

(22) Anmeldetag: **10.12.85**

(54) **Spindeltrieb mit einer Gewindespindel und einem oder mehreren die Spindel exzentrisch umgebenden Wälzringen.**

(30) Priorität: **21.12.84 DE 3446723**

(43) Veröffentlichungstag der Anmeldung:
**25.06.86 Patentblatt 86/26**

(45) Bekanntmachung des Hinweises auf die Patenterteilung:
**02.11.88 Patentblatt 88/44**

(84) Benannte Vertragsstaaten:
**CH DE FR GB LI SE**

(56) Entgegenhaltungen:
**EP-A-0 034 640**
**CH-A-519 124**
**DE-A-2 725 054**
**DE-A-2 839 920**
**DE-A-3 421 467**
**US-A-2 556 572**
**US-A-3 698 258**
**US-A-3 730 016**
**US-A-3 937 089**

**Hütte, 26. Auflage, Band 2, 1931, Berlin. Wilhelm Ernst & Sohn. Seiten 13, 14, 15.**

(73) Patentinhaber: **Gärtner, Robert, Dr., Freiherr- vom- Stein- Strasse 8, D-6308 Butzbach/Hessen (DE)**

(72) Erfinder: **Gärtner, Robert, Dr., Freiherr- vom- Stein- Strasse 8, D-6308 Butzbach/Hessen (DE)**

(74) Vertreter: **Wangemann, Horst, Dipl.- Ing., Stresemannstrasse 28, D-4000 Düsseldorf 1 (DE)**

**Beschreibung**

Die Erfindung betrifft einen Spindeltrieb der in Oberbegriff des Hauptanspruchs genannten Art.

Ein solcher Spindeltrieb ist u.a. aus der DE-OS-2 839 920 bekannt. Der Platzbedarf für derartige Spindetriebe ist häufig sehr begrenzt, so daß jede Verkleinerung des den Wälzring oder die Wälzringe tragenden Mutterkörpers, der die Spindel umfaßt, unter Berücksichtigung der für einen solchen Spindeltrieb wesentlichen Parameter die u.a. Geschwindigkeit, Genauigkeit, Verschleißfreiheit, von großer Bedeutung ist.

Der Erfindung liegt daher die Aufgabe zugrunde, einen gattungsgemäßen Spindeltrieb derart weiter zu bilden, daß er bei vorgegebenen Spindelabmessungen einen kleinen Mutterkörper und damit einen kleinen Wälzring oder Wälzringe aufweist, ohne daß die Wirkung und die Funktion des Spindeltriebes beeinträchtigt werden.

Diese Aufgabe wird bei einem Spindeltrieb der genannten Gattung durch die Merkmale des Hauptanspruches gelöst. Die Merkmale der Unteransprüche dienen der Verbesserung und Weiterbildung der Merkmale des Hauptanspruches.

Zwar kennt der Stand der Technik zeichnerische Darstellungen von Spindelgewinden und sie umfassende Wälzringmuttern, die teilweise sogar einen inneren Grundkreis ihrer Wälzringe zeigen, die kleiner als der Außendurchmesser des Spindelgewindes sind. Allein in der Praxis lassen sich diese Spindeln nicht realisieren bzw. geben die zeichnerischen Darstellungen keinen Hinweis, wie tatsächlich ein Spindeltrieb mit einem möglichst kleinen Mutterkörper und dementsprechend mit einem Wälzring oder mit Wälzringen geringstmöglichen Durchmessers seines bzw. ihrer Grundkreise herstellbar ist.

Der kennzeichnende Teil des Hauptanspruches gibt dagegen eine technische Lehre, die sowohl rechnerisch als auch zeichnerisch dem Fachmann die Lehre an die Hand gibt, die gestellte Aufgabe, einen möglichst kleinen Wälzring bei gegebenem Flankenwinkel, bei gegebener Steigung des Spindelgewindes, bei gegebenem Durchmesser des Gewindekernes und des Außendurchmessers des Gewindes zu lösen.

Zum Verständnis der gegebenen Lehre bedarf es der Berücksichtigung der Begriffe "Kreuzen" und "Schneiden" bzw. des Begriffes "Kreuzungsabstand". Aus "Technische Raumkinematik" von R. Beier, Springer-Verlag, Berlin/Göttingen, Heidelberg, 1963, S. 78, sind "Kreuzungspunkte" als Punkte geringsten Abstandes zwischen zwei Geraden definiert. Diese kürzeste Verbindungslinie bzw. Abstand zwischen diesen beiden Punkten als Senkrechte auf den beiden Geraden wird als "Kreuzungsabstand" bezeichnet. Wird dieser "Kreuzungsabstand" zwischen den beiden vorstehend erwähnten "Kreuzungspunkten" null, dann "schneiden' sich die beiden Geraden.

Bei einem Trapezgewinde der Spindel und einer entsprechenden Trapezquerschnittsform des Wälzringes ergeben sich zwei Grundkreise des Wälzringes als innere Begrenzungskreise dieses Ringes. Einer dieser Grundkreise wirkt in bestimmter Art und Weise mit der benachbarten Flanke und dessen äußerer Schraubenlinie des Spindelgewindes zusammen, wobei dem kennzeichnenden Teil des Hauptanspruches gemäß der kleinste mögliche Grundkreis eines Wälzringes dann gegeben ist, wenn sich der Grundkreis und die diesem benachbarte, äußere Schraubenlinie des Spindelgewindes sich schneiden, d.h. der Kreuzungsabstand null ist. In der Praxis jedoch hat sich gezeigt, daß dieser theoretische Wert auf die Dauer kein verschleißfreies Arbeiten zuläßt, weswegen vorzugsweise eine geringe Abweichung von diesem "Schneiden" erwünscht ist, mit anderen Worten der Abstand der beiden am nächsten gelegenen Punkte des Grundkreises des Wälzringes und der benachbarten äußeren Schraubenlinie des Gewindes, d.h. der beiden "Kreuzungspunkte" einen geringen Wert annimmt. Der Kreuzungsabstand soll einen Wert zwischen Null und 15 % des Radius des Grundkreises des Wälzringes annehmen.

In der Zeichnung ist die Erfindung dargestellt und zwar zeigt

Fig. 1 die Seitenansicht einer Spindel mit zwei in Durchmesser unterschiedlichen Wälzringen,

Fig. 2 einen teilweisen Schnitt durch einen Wälzring,

Fig. 3 einen teilweisen Schnitt durch eine Spindel und durch einen weiteren Wälzring,

Fig. 4 einen Querschnitt durch die Spindel mit einem kleinen Wälzring,

Fig. 5 dieselbe Spindel mit einen wesentlich größeren Wälzring,

Fig. 6 eine Darstellung in gegenüber Fig. 1 größerem Maßstab mit der Darstellung des einen Grundkreises eines trapezförmigen Wälzringes und der benachbarten Schraubenlinie des Spindelgewindes und

Fig. 7 die gleiche Darstellung mit einem kleineren Wälzring (vgl. Fig. 4 und 5).

Die Gewindespindel 1 besitzt einen Kern 4 und ein schraubenlinienförmig verlaufendes Gewinde mit Gewindegängen 2, zwischen denen Gewindenuten 3 gebildet sind, die radial einwärts durch den Kern 4 begrenzt sind.

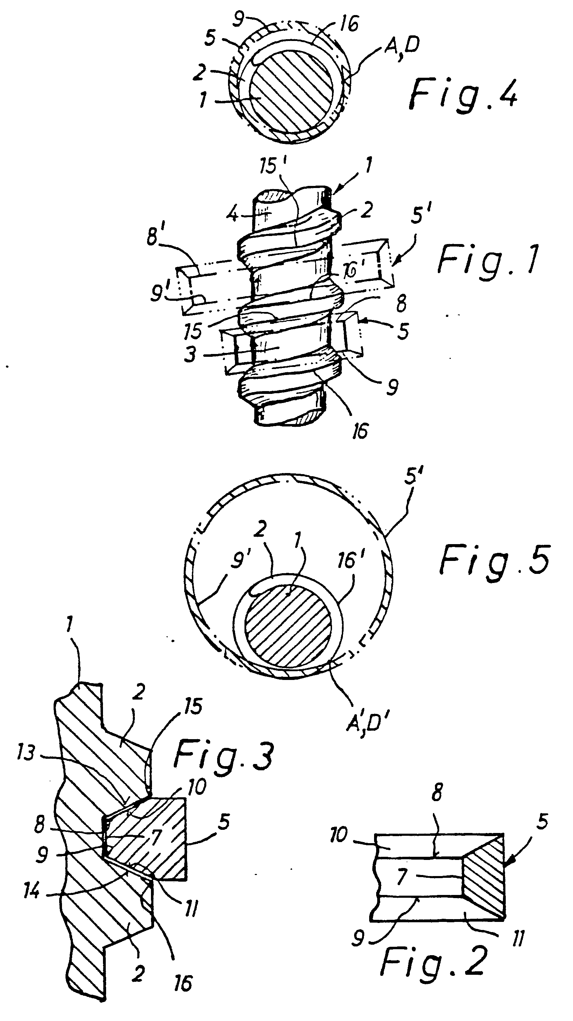

In dargestelltem Beispiel ist die Erfindung an Hand von zwei Wälzringen 5, 5' in Fig. 1 bis 5 dargestellt, deren innere Kopfringfläche 7 (Fig. 2 und 3) von zwei Grundkreisen 8, 9 bzw. 8', 9' begrenzt werden, die mit ihren schrägen Seiten 10, 11 an Flanken 13, 14 mit äußeren Schraublinien 15, 16 bzw. 15', 16' der Gewindegänge 2 des Spindelgewindes sich abwälzen.

Für die Erfindung ist jeweils der innere Grundkreis 8, 9 bzw. 8', 9' und die benachbarte äußere Schraubenlinie 15, 16 bzw. 15', 16' der Flanken 13, 14 der Gewindegänge 2 zu betrachten, auf denen sich die entsprechende schräge Seite 10 oder 11 des Wälzringes 5, 5' abwälzt (Fig. 1, 3, 4, 5).

Für jeden Grundkreis 8, 9 bzw. 8', 9' und die benachbarte Schraubenlinie 15, 16 bzw. 15', 16' gibt es einen geringsten Abstand. Dieser Abstand bildet den Kreuzungsabstand zwischen den beiden Kreuzungspunkten, d.h. den Punkten des Grundkreises und der Schraubenlinie, die sich am nächsten liegen.

Der Lehre der Erfindung gemäß ist nun anzustreben, daß dieser Abstand einen kleinstmöglichen Wert annimmt, d.h. einen Wert zwischen 0 und 15 % Vorzugsweise einen Wert zwischen 2 und 8 % des Radius des oder der Grundkreise der Wälzring.

Bei dem Vergleich der Fig. 4 und 5 scheint zunächst der Punkt A' des Grundkreises 9' des Wälzringes 5' in Fig. 5 den gleichen Abstand von der Schraubenlinie 16 der Spindel 1 zu haben wie der Punkt A des Ringes 5 von der Schraubenlinie 16 der Spindel 1 in Fig 4. Hierbei ist jedoch der in Achsrichtung der Spindel 1 in Fig. 5 gelegene Abstand des Punktes A' von den Punkt D' der Schraubenlinie 16' von dem Grundkreis 9' des Wälzringes 5' zu berücksichtigen und dieser Abstand als Kreuzungsabstand zwischen den beiden Kreuzungspunkten A', D' ist wesentlich größer als der Kreuzungsabstand zwischen dem Punkt A und dem Punkt D der äußeren Schraubenlinie 16 von dem Grundkreis 9 der Ausführung nach Fig. 4.

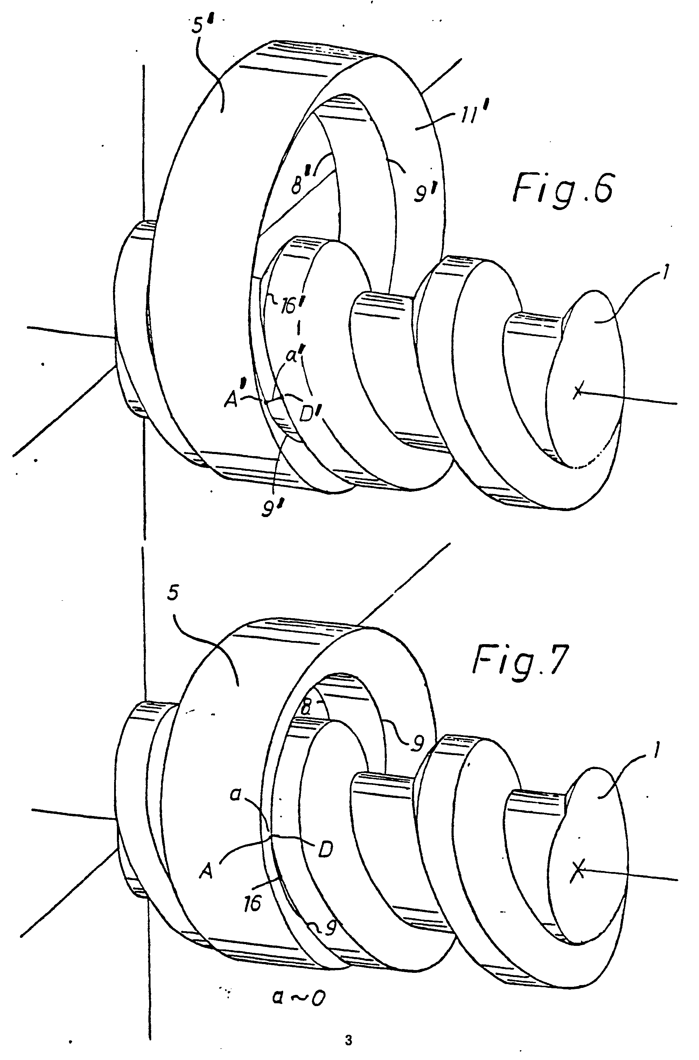

In Fig. 6 ist der größere, im Querschnitt trapezförmige Wälzring 5' mit seinen beiden Grundkreisen 8', 9' erkennbar, während die Spindel 1 ein Gewinde besitzt, dessen eine äußere Schraubenlinie die Bezugsziffer 16' trägt.

Dem Grundkreis 9' des Wälzringes 5' ist die Schraubenlinie 16' benachbart. Der geringste Abstand zwischen dem Grundkreis 9' und der Schraubenline 16' ist in vorliegendem Falle mit a' bezeichnet, wobei die Punkte A' und D' den geringsten Abstand, d.h. den Kreuzungsabstand aufweisen, d.h. die beiden Punkte A' und D' liegen in gemeinsamen Zeit der Tangenten an dem Grundkreis und die Schraubenlinie in diesen Punkten.

In Fig. 7 ist wiederum die gleiche Spindel 1 dargestellt, wobei ein Wälzring 5 wesentlich kleineren inneren Durchmessers angewandt ist, wobei wieder die Grundkreise 8 und 9 erkennbar sind und die eine (hier relevante) Schraubenlinie die Bezugsziffer 16 trägt. Der Abstand zwischen den beiden Punkten A und D als diejenigen Punkte, die den geringsten Abstand a Zwischen dem Grundkreis 9 und der benachbarten Schraubenlinie 16 definieren, ist hier wesentlich kleiner als der Abstand a' bei der Ausführungsform nach Fig 6 mit dem größeren Wälzring 5'. Der Kreuzungsabstand a bzw. a' soll erfindungsgemäß, wie oben dargelegt, zwischen 0 und 15 % vorzugsweise zwischen 2 und 8 % des Radius der Grundkreise 8 bzw. 9 der Wälzringe ausmachen.

Bei gegebenem Flankenwinkel, gegebenen Steigung und Kerndurchmesser der Spindel sowie Außendurchmesser des Spindelgewindes läßt sich sowohl zeichnerisch wie rechnerisch unter Berücksichtigung, daß der Kreuzungsabstand a bzw. a' möglichst klein sein soll, ein kleiner, d.h. optimaler Wälzringdurchmesser schaffen, der im wesentlichen nur noch von seiner Tragfähigkeit, d.h. seiner Festigkeit bestimmt wird.

Den bei trapezförmigem Querschnitt des Wälzringes 8 geltenden Verhältnissen entsprechen die Verhältnisse bei einem Spitzgewinde und entsprechender Ausbildung des Wälzringes.

Die Wälzringe 5 können als Innenring eines Wälzlagers ausgebildet sein oder mit dem Innenring eines solchen Lagers verbunden sein, wobei die Lageraußenringe Teile des Mutterkörpers bilden oder mit dem Mutterkörper verbunden sind.

Statt des hier dargestellten und beschriebenen Wälzringes können mehrere Wälzringe Anwendung finden, die als Einzelringe in einem Muttergehäuse angeordnet sind oder die die Teile eines gemeinsamen Mutterkörpers bilden, der an seiner Innenseite mehrere Ringe wie Wulste oder Rippen aufweist.

**Patentansprüche**

1. Spindeltrieb mit einer Gewindespindel (1) und mindestens einem die Spindel exzentrisch umgebenden Wälzring (5), der sich unter einseitigem Eingriff in das Spindelgewinde auf den Flanken (13, 14) des Gewindes abwälzt und in einem längs der Spindel (1) bewegbaren Mutterkörper od. dgl. gehalten ist, wobei die einander am nächsten gelegenen Punkte (A, D - Kreuzungspunkte) der äußeren Schraubenlinie bzw. der parallelen Schraubenlinien (15, 16) des Spindelgewindes und des benachbarten, inneren Grundkreises oder Fußkreises (8, 9) des Wälzringes (5) einen Kreuzungsabstand (a) haben, dadurch gekennzeichnet, daß der Kreuzungsabstand (a) 0 - 15 % des Radius des Grund- oder Fußkreises (8, 9) des Wälzringes (5) beträgt.

2. Spindeltrieb nach Anspruch 1, dadurch gekennzeichnet, daß der Kreuzungsabstand (a) 2 - 8 % des Radius des Grund- oder Fußkreises (8, 9) des Wälzringes (5) beträgt.

3. Spindeltrieb nach Anspruch 1 und 2, dadurch gekennzeichnet, daß der Innendurchmesser des Wälzringes (5) kleiner als der Außendurchmesser des Spindelgewindes ist.

4. Spindeltrieb nach Anspruch 1, dadurch gekennzeichnet, daß das Gewinde ein Spitzgewinde ist und der Idealwert bei einem Kreuzungsabstand gleich Null, für dessen Durchmesser annähernd Außenradius des Spindelgewindes plus dem Radius des Spindelkerns (4) gilt, um maximal 8 % im Radius vom verwendeten Wälzring (5) übertroffen wird.

5. Spindeltrieb nach Anspruch 1 und einem der Ansprüche 2 bis 4, dadurch gekennzeichnet, daß der Flankenwinkel des Spindelgewindes 35 - 45° beträgt.

6. Spindeltrieb nach Anspruch 5, dadurch gekennzeichnet, daß der Flankenwinkel des Spindelgewindes mindestens 40° beträgt.

**Claims**

1. Worm drive with a threaded spindle (1) and at least one rolling ring (5) eccentrically surrounding the spindle, rolling on the sides (13, 14) of the thread with one-sided engagement into the spindle thread and retained in a nut body or the like which is movable along the spindle (1), where the points of nearest approach (A, D - crossing points), of the outer screw line or the parallel screw lines (15, 16) of the spindle thread and of the adjacent inner base circle or root circle (8, 9) of the rolling ring (5) having a crossing distance (a), characterised in that the crossing distance (a) is 0 - 15 % of the radius of the base or root circle (8, 9) of the rolling ring (5).

2. Worm drive according to claim 1, characterised in that the crossing distance (a) is 2 - 8 % of the radius of the base or root circle (8, 9) of the rolling ring (5).

3. Worm drive according to claim 1 and 2, characterized in that the inner diameter of the rolling ring (5) is smaller than the outer diameter of the spindle thread.

4. Worm drive according to claim 1, characterized in that the thread is a sharp thread and the ideal value for a crossing distance of zero, for the diameter of which approximately the outer radius of the spindle thread plus the radius of the spindle core (4) applies, is exceeded by at the most 8 % in the radius by the rolling ring (5) used.

5. Worm drive according to claim 1 and one of claims 2 to 4, characterised in that the side angle of the spindle thread is 35 - 45°.

6. Worm drive according to claim 5, characterized in that the side angle of the spindle thread is at least 40°.

**Revendications**

1. Dispositif d'entraînement par vis sans fin avec une tige filetée (1) et au moins un anneau de roulement (5) entourant la tige excentriquement qui, en s'engageant d'un cité dans le filetage de la broche roulé sur les flancs (13, 14) du filetage et est maintenu dans un corps d'écrou ou un élément analogue qui peut se déplacer le long de la broche (1), les points de l'hélice extérieure ou des hélices parallèles (15, 16) du filetage de la broche et du cercle de base intérieur voisin (8, 9) de l'anneau de roulement (5) qui sont les plus rapprochés (A, D - points de croisement) se trouvant à une distance (a) au croisement, caractérisé en ce que la distance au croisement (a) est comprise entre 0 et 15 % du rayon du cercle de base (8, 9) de l'anneau de roulement (5).

2. Dispositif d'entraînement par vis sans fin selon la revendication 1, caractérisé en ce que la distance au croisement (a) est comprise entre 2 et 8 % du rayon du cercle de base (8, 9) de l'anneau de roulement (5).

3. Dispositif d'entraînement par vis sans fin selon les revendications 1 et 2, caractérisé en ce que le diamètre intérieur de l'anneau de roulement (5) est plus petit que le diamètre extérieur du filetage de la broche.

4. Dispositif d'entraînement par vis sans fin selon la revendication 1, caractérisé en ce que le filetage est en pointe et que la valeur idéale pour une distance au croisement égale à zéro dont le diamètre est approximativement égale au rayon extérieur du filetage de la broche plus le rayon du corps de broche (4) est dépassée au maximum de 8 % du rayon de l'anneau de roulement (5) utilisé.

5. Dispositif d'entraînement par vis sans fin selon la revendication 1 et l'une des revendications 2 à 4, caractérisé en ce que l'angle de flancs du filetage de la broche est de 35 à 45°.

6. Dispositif d'entraînement par vis sans fin selon la revendication 5, caractérisé en ce que l'angle des flancs du filetage de la broche est d'au moins 40°.

0 185 301

Fig. 4

Fig. 1

Fig. 5

Fig. 3

Fig. 2

Fig.6

Fig.7

$a \sim 0$